# EUROPÄISCHE PATENTANMELDUNG

(11) **EP 2 689 894 A2**
(43) Veröffentlichungstag der Anmeldung: **29.01.2014**
(21) Anmeldenummer: 13401075.0
(22) Anmeldetag: 22.07.2013
(51) Int. Cl.: B25B 31/00, E04B 1/76, E04F 21/18, F16B 13/14

(54) **Werkzeug für die Montage eines Dämmstoffdübels**

(30) Priorität: 25.07.2012 DE 102012106745
(71) Anmelder: fischerwerke GmbH & Co. KG, 72178 Waldachtal (DE); STO AG, 79780 Stühlingen (DE)
(72) Erfinder: Fischer, Rainer, 72178 Waldachtal (DE); Fürstner, Reiner, 78187 Geisingen (DE); Renz, Jürgen, 72202 Nagold (DE)

(57) **Zusammenfassung**

Die Erfindung betrifft ein Werkzeug (1) für die Montage eines Dämmstoffdübels zur Befestigung einer Dämmstoffplatte an einem Verankerungsgrund. Das Werkzeug (1) weist einen Tiefenanschlag (7) auf, der an der Dämmstoffplatte anliegt, wenn der Dämmstoffdübel in einer vorbestimmten Position in der Dämmstoffplatte angeordnet ist. Erfindungsgemäß ist der Tiefenanschlag (7) verformbar, derart, dass ein Schaft (2) des Werkzeugs (1) nach dem Anliegen des Tiefenanschlags (7) an der Dämmstoffplatte unter elastischer Verformung des Tiefenanschlags (7) weiter in die Dämmstoffplatte hinein bewegbar ist.

## Beschreibung

Die Erfindung betrifft ein Werkzeug mit den Merkmalen des Oberbegriffs des Anspruchs 1 für die Montage eines Dämmstoffdübels.

Derartige Werkzeuge sind aus dem deutschen Patent DE 10 2010 048 536 B4 und den Offenlegungsschriften DE 10 2008 044 124 A1 und DE 10 2011 016 383 A1 bekannt.

Ein gattungsgemäßes Werkzeug für die Montage eines Dämmstoffdübels zur Befestigung einer Dämmstoffplatte an einem Verankerungsgrund zeigt die Offenlegungsschrift DE 101 59 632 A1. Das in den Figuren 1 und 2 dieser Druckschrift dargestellte Werkzeug umfasst einen in Längsrichtung lang gestreckten Schaft, an dem ein Tiefenanschlag in Form einer sich radial erstreckenden Scheibe angeordnet ist. Der Tiefenanschlag ist stabil und biegesteif, so dass er sich beim Aufliegen auf der Dämmstoffplatte im Wesentlichen nicht verformt. Um eine Drehbewegung von einem Bohrschrauber auf das Werkzeug übertragen zu können, weist der Schaft an seinem dem Dämmstoffdübel abgewandten hinteren Ende ein Drehmomentübertragungsmittel in Form eines Sechskants auf, mit dem das Werkzeug in die Werkzeugaufnahme des Bohrschraubers eingespannt werden kann. An dem dem Dämmstoffdübel zugewandten vorderen Ende des Schafts ist eine Klinge eines Schraubendrehers angeordnet, mit der eine Schraube in den Dämmstoffdübel eingetrieben werden kann. Zudem wird auch der Teller des Dämmstoffdübels in Drehung versetzt, in die Dämmstoffplatte eingetrieben und dadurch versenkt. Um das Versenken des Dämmstoffdübels in die Dämmstoffplatte auf ein vorbestimmtes Maß zu begrenzen, ist der Tiefenanschlag fest und nicht verschiebbar am Schaft des Werkzeugs angeordnet. Ist das vorbestimmte Maß erreicht, so liegt der Tiefenanschlag auf der Dämmstoffplatte auf, was dem Anwender signalisiert, dass der Setzvorgang beendet ist. Aufgrund der festen Verbindung des Tiefenanschlags mit dem Schaft und der stabilen und biegesteifen Ausbildung des Tiefenanschlags ist eine weitere Bewegung des Schafts in die Dämmstoffplatte hinein nicht möglich, ohne dass der Bereich der Dämmstoffplatte, auf dem der Tiefenanschlag aufliegt, großflächig dauerhaft komprimiert und hierdurch geschädigt wird.

Aufgabe der Erfindung ist es, ein alternatives Werkzeug für die Montage eines Dämmstoffdübels zur Befestigung einer Dämmstoffplatte an einem Verankerungsgrund vorzuschlagen.

Diese Aufgabe wird erfindungsgemäß durch ein Werkzeug mit den Merkmalen des Anspruchs 1 gelöst. Das erfindungsgemäße Werkzeug für die Montage eines Dämmstoffdübels zur Befestigung einer Dämmstoffplatte an einem Verankerungsgrund weist einen sich in eine Längsrichtung erstreckenden Schaft auf. Insbesondere ist der Schaft in Längsrichtung stabartig lang gestreckt, wobei sich der Querschnitt, beispielsweise ein Sechskant, insbesondere über einen Großteil der Länge des Schafts nicht ändert. Am hinteren Ende des Schafts ist ein erstes Drehmomentübertragungsmittel zum Übertragen einer Drehbewegung auf das Werkzeug und an seinem vorderen Ende ein zweites Drehmomentübertragungsmittel zum Übertragen der Drehbewegung auf den Dämmstoffdübel angeordnet. Mit "vorderem Ende" ist das Ende des Schafts gemeint, das bei bestimmungsgemäßer Verwendung des Werkzeugs dem Dämmstoffdübel zugewandt ist. Das "hintere Ende" dagegen ist bei bestimmungsgemäßer Verwendung dem Dämmstoffdübel abgewandt. Das erste Drehmomentübertragungsmittel ist beispielsweise ein Handgriff, wie er von Schraubendrehern bekannt ist, falls das Werkzeug von Hand gedreht werden soll. Das erste Drehmomentübertragungsmittel kann aber auch beispielsweise als Außensechskant ausgebildet sein, der in eine Werkzeugaufnahme eines Bohrschraubers eingeführt werden kann. Das zweite Drehmomentübertragungsmittel kann ebenfalls ein Außensechskant oder aber ein Torx, ein Innensechskant oder eine beliebige weitere Geometrie sein, die zur Übertragung einer Drehbewegung geeignet ist. Die Drehbewegung wird über das zweite Drehmomentübertragungsmittel auf den Dämmstoffdübel übertragen, wobei hierbei der gesamte Dämmstoffdübel oder nur Teile des Dämmstoffdübels, wie beispielsweise ein Teller, eine Wendel und/oder eine Schraube zum Spreizen des Spreizbereichs, gedreht werden. Am Schaft ist zwischen den beiden Enden ein Tiefenanschlag angeordnet. Der Tiefenanschlag ist insbesondere als eine sich in radialer Richtung erstreckende, ebene Scheibe ausgebildet. Der Tiefenanschlag ist derart angeordnet, dass er an der Dämmstoffplatte anliegt, wenn der Dämmstoffdübel mit dem Werkzeug in einer vorbestimmten Position in der Dämmstoffplatte angeordnet ist. Der Tiefenanschlag hat insbesondere die Funktion einer optischen Markierung, die dem Anwender signalisiert, dass der Dämmstoffdübel seine vorbestimmte Position in der Dämmstoffplatte erreicht hat und der Montagevorgang abgeschlossen ist.

Kennzeichnend für das erfindungsgemäße Werkzeug ist, dass der Tiefenanschlag verformbar ist, derart, dass der Schaft nach dem Anliegen des Tiefenanschlags an der Dämmstoffplatte unter elastischer Verformung des Tiefenanschlags weiter in die Dämmstoffplatte hinein bewegbar ist. Bei der Verformung des Tiefenanschlags wird der Bereich der Dämmstoffplatte, auf dem der Tiefenanschlag aufliegt, im Wesentlichen nicht komprimiert und somit auch nicht geschädigt. Hierdurch ist es möglich, dass der Verwender den Dämmstoffdübel, wenn er seine vorbestimmte Position in der Dämmstoffplatte erreicht hat, mit dem Werkzeug noch weiter in die Dämmstoffplatte hinein bewegen kann, falls der Dämmstoffdübel im Verankerungsgrund nur unzureichend befestigt ist. Der Verwender kann somit testen, ob der Dämmstoffdübel ausreichend im Verankerungsgrund verankert ist oder nicht: Ist der Dämmstoffdübel nicht ausreichend im Verankerungsgrund verankert, so bewirkt eine axiale Druckkraft, die mittels des Werkzeugs auf den Dämmstoffdübel aufgebracht wird, eine Verschiebung des Dämmstoffdübels in die Dämmstoffplatte hinein. Ist der Dämmstoffdübel ausreichend im Verankerungsgrund verankert, so kann er nicht weiter bewegt werden und die aufgebrachte Kraft wird über den Dämmstoffdübel in den Verankerungsgrund übertragen. Wäre der Tiefenanschlag steif und nicht verformbar ausgeführt, so würde die Druckkraft über den Tiefenanschlag direkt auf die Dämmstoffplatte übertragen. Eine Bewegung des Schafts wäre zumindest bei relativ druckfesten Dämmmaterialien nicht möglich, die Verankerung des Dämmstoffdübels könnte nicht kontrolliert werden. Nach dem Lösen des Werkzeugs vom Dämmstoffdübel verformt sich der elastisch verformte Tiefenanschlag in seine ursprüngliche Form zurück, so dass der Tiefenanschlag für die Montage eines weiteren Dämmstoffdübels verwendet werden kann.

Ein weiterer Vorteil des erfindungsgemäßen Werkzeugs ist, dass das Werkzeug auch dann zur Montage eines Dämmstoffdübels eingesetzt werden kann, wenn der Dämmstoffdübel schräg zur Oberfläche der Dämmstoffplatte gesetzt werden muss, beispielsweise wenn eine Bohrung, in die der Dämmstoffdübel eingebracht werden soll, nicht rechtwinklig zur Plattenoberfläche eingebracht wurde. Bei der Montage eines Dämmstoffdübels in einem schräg gebohrten Bohrloch wird der Tiefenanschlag zunächst einseitig an der Dämmstoffplatte anstehen. Bei einem herkömmlichen Werkzeug mit steifem Tiefenanschlag müsste die Montage abgebrochen werden, da der Tiefenanschlag sonst die Oberfläche der Dämmstoffplatte beschädigen würde. Durch die Verformbarkeit des Tiefenanschlags des erfindungsgemäßen Werkzeugs kann die Montage aber fortgesetzt werden, wobei sich der Tiefenanschlag aufgrund seiner Verformbarkeit zur Längsachse des Schafts des Werkzeugs neigt und auf der Dämmstoffplatte aufliegt.

Bei einer bevorzugten Ausgestaltungsform ist der Tiefenanschlag biegeelastisch verformbar. Liegt der Tiefenanschlag bei der Montage des Dämmstoffdübels an der Dämmstoffplatte an, so verformt sich der Tiefenanschlag aufgrund seiner biegeelastischen Ausführung, falls der Schaft weiter in die Dämmstoffplatte hinein bewegt wird. Insbesondere dann, wenn der Tiefenanschlag als ebene Scheibe ausgeführt ist, wölbt sich die Scheibe. Dies kann vom Anwender optisch gut wahrgenommen werden.

Vorzugsweise liegt der Tiefenanschlag mit einem inneren Rand am Schaft des Werkzeugs an und steht bis zu einem äußeren Rand radial über den Schaft über. Dabei ist der Tiefenanschlag derart verformbar, dass der äußere Rand relativ zum inneren Rand in Längsrichtung nach hinten verschoben wird, wenn das Werkzeug nach dem Anliegen des Tiefenanschlags auf der Dämmstoffplatte weiter in die Dämmstoffplatte hinein bewegt wird. Insbesondere wölbt sich der Tiefenanschlag derart, dass der äußere Rand sich von der Dämmstoffplatte weg bewegt. Beispielsweise bildet sich bei einem als ebene Scheibe ausgeführten Tiefenanschlag eine Art trichterförmige Rotationsschale, deren äußerer Rand nicht mehr auf der Dämmstoffplatte aufliegt, sondern von der Dämmstoffplatte beabstandet ist, da sie aufgrund der Verformung der Scheibe von der Dämmstoffplatte weg bewegt wird. Vorzugsweise ist der äußere Rand um mindestens einen Millimeter, insbesondere um zwei Millimeter relativ zum inneren Rand in Längsrichtung bewegbar.

Weiterhin ist bevorzugt, dass der Tiefenanschlag dünnwandig ist. "Dünnwandig" bedeutet in diesem Zusammenhang, dass die radiale Erstreckung, also der Durchmesser des Tiefenanschlags, deutlich größer als die Längserstreckung, also die Dicke des Tiefenanschlags ist. Bei einem nicht kreisrund ausgeführten Tiefenanschlag ist mit "Durchmesser" der Durchmesser eines den Tiefenanschlag in Umfangsrichtung umschreibenden Kreises zu verstehen. Vorzugsweise ist das Verhältnis von Durchmesser zu Dicke des Tiefenanschlags größer als 15, insbesondere größer 35, insbesondere größer 55.

Bei einer weiteren bevorzugten Ausgestaltungsform des erfindungsgemäßen Werkzeugs ist der Tiefenanschlag elastisch stauchbar, derart, dass sich die Dicke des Tiefenanschlags verringert, wenn der Schaft des Werkzeugs nach dem Anliegen des Tiefenanschlags an der Dämmstoffplatte weiter in die Dämmstoffplatte hinein bewegt wird. Vorzugsweise ist der Tiefenanschlag um mindestens einen Millimeter, insbesondere um mindestens zwei Millimeter elastisch stauchbar. Liegt der Tiefenanschlag des Werkzeugs bei der Montage des Dämmstoffdübels an der Dämmstoffplatte an, so weiß der Verwender, dass der Dämmstoffdübel in der vorbestimmten Position in der Dämmstoffplatte angeordnet ist. Aufgrund der Stauchbarkeit des Tiefenanschlags kann der Verwender dann überprüfen, ob der Dämmstoffdübel ausreichend verankert ist. Ist dies nicht der Fall, so wird der Schaft durch das Aufbringen der Druckkraft weiter in die Dämmstoffplatte hinein bewegt, da der Dämmstoffdübel die Kraft nicht aufnehmen und in den Verankerungsgrund einleiten kann. Der Tiefenanschlag wird dabei gestaucht, so dass sich seine Dicke verringert.

Weiterhin ist bevorzugt, dass der Tiefenanschlag aus Kunststoff ist. Der Tiefenanschlag ist somit ohne großen Aufwand und preisgünstig herstellbar, beispielsweise als Spritzgussteil. Zudem kann durch eine entsprechende Auswahl des Kunststoffes die elastische Verformbarkeit auf einfache Weise und gezielt eingestellt werden.

Bei einer weiteren bevorzugten Ausgestaltungsform des erfindungsgemäßen Werkzeugs ist am Schaft des Werkzeugs mindestens eine Setztiefenmarkierung angeordnet. Insbesondere können mehrere Setztiefenmarkierungen vorgesehen sein, die in Längsrichtung voneinander beabstandet am Schaft angeordnet sind. Der Tiefenanschlag kann beispielsweise längs des Schafts beweglich und arretierbar am Schaft angeordnet sein, so dass der Tiefenanschlag zu einer der Setztiefenmarkierungen bewegt und dort arretierbar werden kann, abhängig von der vorbestimmten Position, in der der Dämmstoffdübel in der Dämmstoffplatte angeordnet werden soll.

Weiterhin ist bevorzugt, dass die Setztiefenmarkierung nutartig ausgeführt ist und dass der Tiefenanschlag eine innere Öffnung aufweist, deren Durchmesser kleiner als der Durchmesser des Schafts ist. Insbesondere ist das Material des Tiefenanschlags im Bereich der Öffnung verformbar, so dass der Tiefenanschlag entlang des Schafts bewegt werden kann und im Bereich der nutartigen Setztiefenmarkierungen in die Setztiefenmarkierungen einrastet. Sind mehrere Setztiefenmarkierungen am Schaft vorgesehen, so kann der Tiefenanschlag leicht zur gewünschten Setztiefenmarkierung verschoben und dort durch Einrasten arretiert werden.

Die Erfindung wird nachfolgend anhand von zwei in den Figuren dargestellten Ausführungsbeispielen näher erläutert.

Es zeigen:
- Figur 1: ein erstes erfindungsgemäßes Werkzeug in einer perspektivischen Darstellung;
- Figur 2: eine Befestigungsanordnung während der Montage eines Dämmstoffdübels mit dem ersten erfindungsgemäßen Werkzeug in einer Seitenansicht;
- Figur 3: die Befestigungsanordnung mit dem ersten Werkzeug und montiertem Dämmstoffdübel in einer Seitenansicht;
- Figur 4: die Verbindung des Tiefenanschlags und des Schafts des erfindungsgemäßen Werkzeugs in einer Schnittdarstellung;
- Figur 5: die Befestigungsanordnung mit dem ersten Werkzeug während eines Tests zum Nachweis, dass der Dämmstoffdübel ausreichend im Verankerungsgrund verankert ist, in einer Seitenansicht;
- Figur 6: die Befestigungsanordnung mit einem zweiten erfindungsgemäßen Werkzeug und montiertem Dämmstoffdübel in einer Seitenansicht; und
- Figur 7: die Befestigungsanordnung mit dem zweiten Werkzeug in einer Seitenansicht während eines Tests zum Nachweis, dass der Dämmstoffdübel ausreichend im Verankerungsgrund verankert ist.

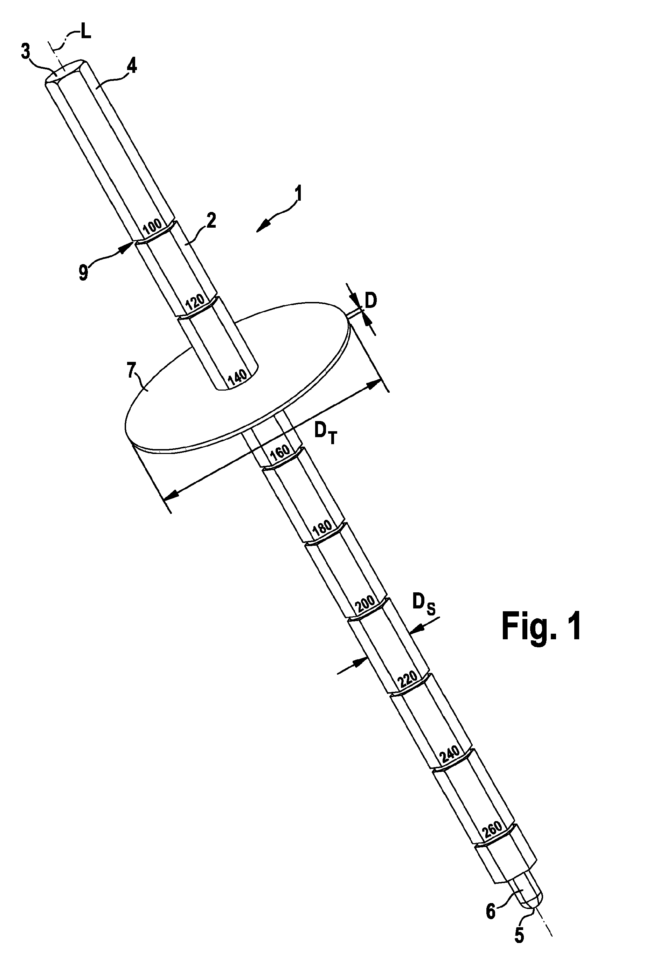

In Figur 1 ist ein erstes erfindungsgemäßes Werkzeug 1 dargestellt. Das Werkzeug 1 umfasst einen sich in Längsrichtung entlang einer Längsachse L erstreckenden Schaft 2, der an seinem hinteren Ende 3 ein erstes Drehmomentübertragungsmittel 4 in Form eines Sechskants aufweist, mit dem das Werkzeug 1 in der Werkzeugaufnahme eines Bohrschraubers (nicht dargestellt) befestigt werden kann. Das erste Drehmomentübertragungsmittel 4 dient zum Übertragen einer Drehbewegung um die Längsachse L auf das Werkzeug 1. Bei dem dargestellten Ausführungsbeispiel des erfindungsgemäßen Werkzeugs 1 besitzt der Schaft 2 den gleichen Querschnitt mit Durchmesser D_{S} wie das erste Drehmomentübertragungsmittel 4. Am vorderen Ende 5 des Schafts 2 ist ein zweites Drehmomentübertragungsmittel 6 angeordnet, zum Übertragen der Drehbewegung auf einen Dämmstoffdübel. Das zweite Drehmomentübertragungsmittel 6 ist ebenfalls ein Außensechskant, allerdings mit einem gegenüber dem Schaft 2 verkleinerten Durchmesser.

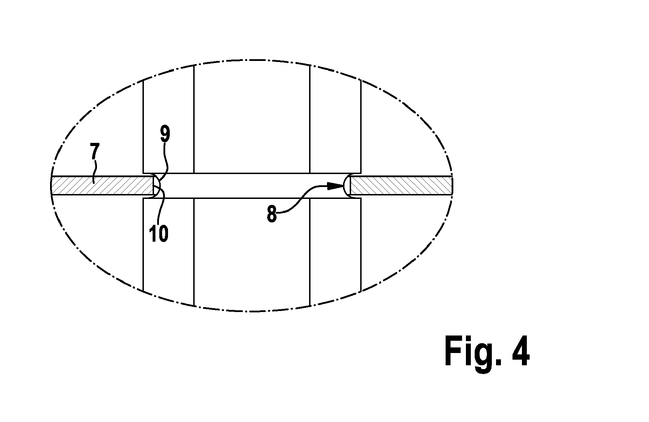

Zwischen den beiden Enden 3, 5 ist am Schaft 2 ein Tiefenanschlag 7 angeordnet. Der Tiefenanschlag 7 ist eine dünnwandige, aus Kunststoff hergestellte Lochscheibe, die biegeelastisch verformbar ist. "Dünnwandig" bedeutet hier, dass der Durchmesser D_{T} des Tiefenanschlags 7 deutlich größer als die Dicke D des Tiefenanschlags 7 ist. Das Verhältnis von Durchmesser D_{T} zur Dicke D des Tiefenanschlags 7 ist in diesem Fall 60 : 1. Der als Lochscheibe ausgebildete Tiefenanschlag 7 weist eine innere Öffnung 8 auf, deren Durchmesser kleiner als der Durchmesser D_{S} des Schafts 2 ist (siehe Figur 4). Am Schaft 7 sind mehrere nutartige Setztiefenmarkierungen 9 angeordnet, in die der Tiefenanschlag 7 mit einem inneren Rand 10 eingreift, so dass der Tiefenanschlag 7 in einer gewünschten Position am Schaft 2 festgelegt ist. "Festgelegt" bedeutet hier, dass der Tiefenanschlag 7 bei der Verwendung des Werkzeugs 1 zur Montage eines Dämmstoffdübels am Schaft 2 ortsfest angeordnet ist. Durch den Verwender kann der Tiefenanschlag 7 allerdings entlang der Längsachse L am Schaft 2 verschoben werden, wenn der Tiefenanschlag 7 an einer anderen Setztiefenmarkierung 9 angeordnet werden soll. Zum Verschieben ist allerdings eine größere Kraft notwendig, als sie üblicherweise bei der bestimmungsgemäßen Verwendung des Werkzeugs 1 bei der Montage eines Dämmstoffdübels auftritt.

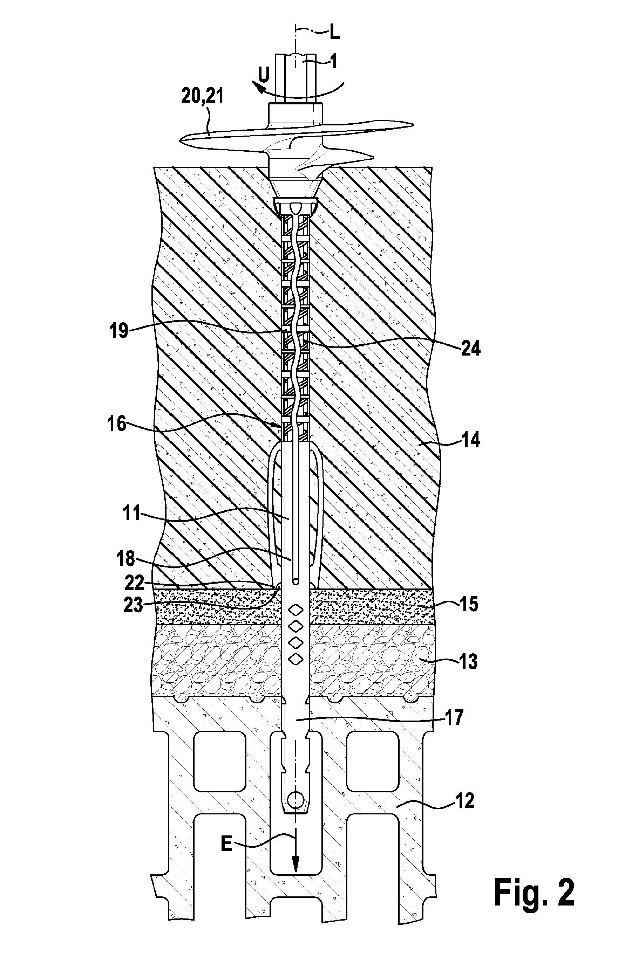

Die Figuren 2 bis 5 zeigen die Verwendung des erfindungsgemäßen Werkzeugs 1 für die Montage eines Dämmstoffdübels 11 in einem Verankerungsgrund 12, bestehend aus Hochlochziegeln, auf dem eine Altputzschicht 13 aufgebracht ist. Der Verankerungsgrund 12 bildet eine Wand eines nicht näher dargestellten Gebäudes. Zur Verbesserung der Wärmedämmung des Gebäudes ist auf der Altputzschicht 13 eine Dämmstoffplatte 14 angeordnet, die mit einer Kleberschicht 15 auf die Altputzschicht 13 geklebt ist. Um die Dämmstoffplatte 14 zusätzlich mechanisch mit dem Verankerungsgrund 12 verbinden zu können, wurde ein Bohrloch 16 durch die Dämmstoffplatte 14, die Kleberschicht 15 und die Altputzschicht 13 hindurch in den Verankerungsgrund 12 eingebracht.

In Figur 2 ist der Dämmstoffdübel 11 in das Bohrloch 16 eingebracht worden. Der Dämmstoffdübel 11 weist einen Spreizabschnitt 17 auf, mit dem der Dämmstoffdübel 11 im Verankerungsgrund 12 verankert werden kann. Der Dämmstoffdübel 11 weist in Einbringrichtung E hinter dem Spreizabschnitt 17 einen hülsenartigen Schaftabschnitt 18 mit einer gitterartigen Stauchzone 19 sowie einen Halteabschnitt 20 auf, an dem ein Dämmstoffgewinde 21 drehbar angeordnet ist. Der Dämmstoffdübel 11 ist so weit in das Bohrloch 16 eingebracht worden, bis ein am Schaftabschnitt 18 angeordnetes Anschlagelement 22 an der Kleberschicht 15 anliegt, was dem Verwender signalisiert, dass der Spreizabschnitt 17 ausreichend weit in das Bohrloch 16 eingebracht ist. Das Anschlagelement 22 ist als flügelartige, radial abstehende Anschlagschulter ausgeführt, mit einer Materialschwächung in Form einer Spritzhaut 23. Die Spritzhaut 23 wirkt als Zugband und verhindert, dass das Anschlagelement 22 ausknickt, wenn es auf die Kleberschicht 15 trifft.

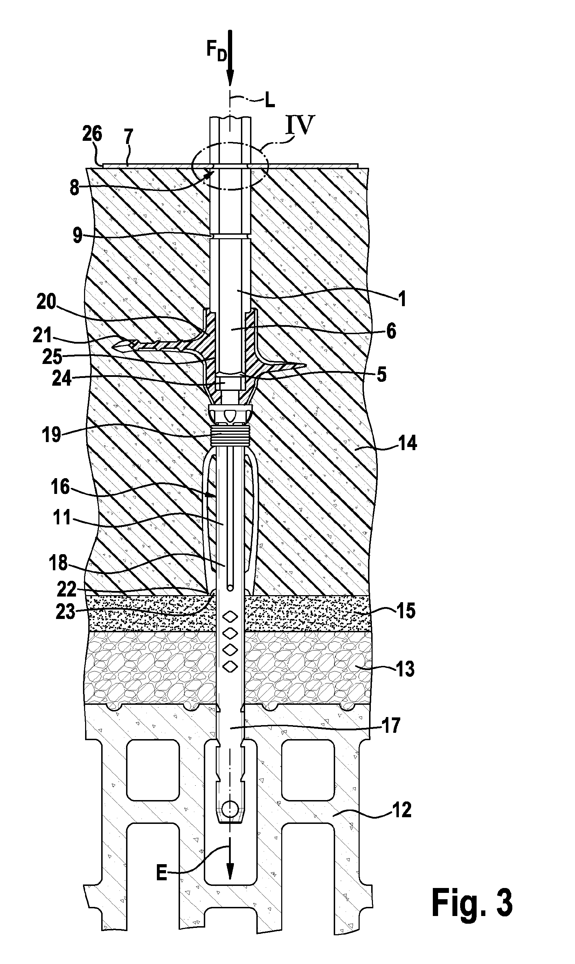

Der Halteabschnitt 20 weist eine Aufnahme 25 in Form eines Innensechskants für das zweite Drehmomentübertragungsmittel 6 des Werkzeugs 1 auf (Fig. 3), mit dem das Dämmstoffgewinde 21 in Umfangsrichtung U gedreht werden kann, so dass das Dämmstoffgewinde 21 in die Dämmstoffplatte 14 schraubenartig schneidet. Am Halteabschnitt 20 ist zudem drehfest ein Spreizelement 24 in Form einer Schraube angeordnet, das vom Halteabschnitt 20 aus in Einbringrichtung E durch die Stauchzone 19 hindurch bis in den Spreizabschnitt 17 ragt. Auf Grund der durch das Werkzeug 1 übertragenen Drehbewegung bewegt sich das Spreizelement 24 beim Einschneiden des Dämmstoffgewindes 21 in die Dämmstoffplatte 14 mit dem Halteabschnitt 20 in Richtung der Einbringrichtung E, wodurch das Spreizelement 24 in den Spreizabschnitt 17 eingetrieben, der Spreizabschnitt 17 radial verspreizt und der Dämmstoffdübel 11 im Verankerungsgrund 12 verankert wird. Hierbei wird die Stauchzone 19 in axialer Richtung gestaucht, so dass sie im gestauchten Zustand eine kurze, geschlossene Hülse bildet, wie dies in Figur 3 zu sehen ist.

Figur 3 zeigt den Dämmstoffdübel 11 nach erfolgter Montage. Das Werkzeug 1 befindet sich mit dem zweiten Drehmomentübertragungsmittel 6 an seinem vorderen Ende 5 noch in der Aufnahme 25, so dass eine axial wirkende Druckkraft F_{D} vom Werkzeug 1 direkt auf den Dämmstoffdübel 11 übertragen werden kann. Der Halteabschnitt 20 des Dämmstoffdübels 11 befindet sich in dem in Figur 3 dargestellten Zustand in einer vorbestimmten Position, in der der Halteabschnitt 20 bis zu einem gewünschten Maß in die Dämmstoffplatte 14 versenkt worden ist, was der Verwender daran erkennt, dass der Tiefenanschlag 7 des Werkzeugs 1 an der Dämmstoffplatte 14 flächig anliegt. Zum Überprüfen, ob der Dämmstoffdübel 11 fest im Verankerungsgrund 12 verankert ist, wird nun vom Verwender mit dem Werkzeug 1 die axial wirkende Druckkraft F_{D} in Richtung der Einbringrichtung E auf den Dämmstoffdübel 11 aufgebracht. Da der in Figur 3 dargestellte Dämmstoffdübel 11 planmäßig im Verankerungsgrund 1 verankert ist, wird die Druckkraft F_{D} vom verspreizten Spreizabschnitt 17 in den Verankerungsgrund 12 übertragen, ohne dass der Dämmstoffdübel 11 sich für den Verwender bemerkbar in Einbringrichtung E zum Verankerungsgrund 12 hin bewegt. Der scheibenartige Tiefenanschlag 7 ist weiterhin eben und liegt flächig an der Dämmstoffplatte 14 an. Der Verwender nimmt somit optisch wahr, dass der Dämmstoffdübel 11 planmäßig im Verankerungsgrund 12 verankert ist.

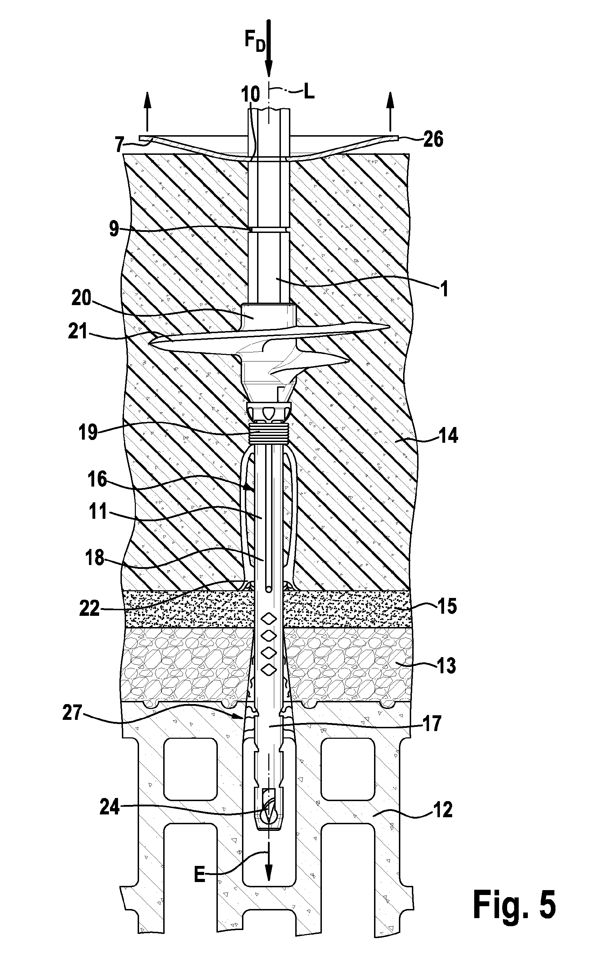

Dagegen ist in Figur 5 eine Situation dargestellt, in der der Dämmstoffdübel 11 nicht planmäßig im Verankerungsgrund 1 verankert werden konnte, da das Bohrloch 16 im Verankerungsgrund 12 durch Abplatzungen 27 stark geweitet ist. Der Dämmstoffdübel 11 ist zwar in der vorbestimmten Position montiert worden, eine Übertragung der Druckkraft F_{D} vom gespreizten Spreizabschnitt 17 auf die Wand des Bohrlochs 16 in den Verankerungsgrund 12 ist aber nicht möglich, da aufgrund der Abplatzungen 27 kein ausreichender Reibschluss zwischen dem Verankerungsgrund 12 und dem Spreizabschnitt 17 des Dämmstoffdübels 11 vorhanden ist. Die vom Verwender über das Werkzeug 1 auf den Dämmstoffdübel 11 aufgebrachte axiale Druckkraft F_{D} wird daher vom Anschlagelement 22 aufgenommen, das radial nach außen knickt, wodurch die stabilisierende Spritzhaut 23 reißt, so dass der Dämmstoffdübel 11 merklich axial in Richtung der Einbringrichtung E bewegt wird. Der Tiefenanschlag 7 verformt sich dabei elastisch, so dass der Schaft 2 nach dem Anliegen des Tiefenanschlags 7 an der Dämmstoffplatte 11 weiter in die Dämmstoffplatte 11 hinein bewegbar ist, weshalb der Tiefenanschlag 7 die Bewegung des Dämmstoffdübels 11 aufgrund der Druckkraft F_{D} nicht behindert. Der Tiefenanschlag 7 ist dabei mit seinem inneren Rand 10 in der nutartigen Setztiefenmarkierung 9 am Schaft 2 des Werkzeugs 1 festgelegt. Der Tiefenanschlag 7 wölbt sich aufgrund der weiteren Bewegung des Schafts 2 in die Dämmstoffplatte 14 hinein zu einer trichterförmigen Rotationsschale. Der äußere Rand 26 wird dabei relativ zum inneren Rand 10 in Längsrichtung L nach hinten verschoben. Die Verschiebung des äußeren Randes 26 relativ zum inneren Rand 10 in Längsrichtung L beträgt in diesem Fall mehr als 2 mm. Der scheibenartige Tiefenanschlag 7 liegt somit nicht mehr flächig an der Dämmstoffplatte 14 an, der äußere Rand 10 ist von der Dämmstoffplatte 14 beabstandet. Der Verwender bekommt aufgrund der Verformung des Tiefenanschlags 7 somit die Rückmeldung, dass der Dämmstoffdübel 11 nicht wie vorgesehen im Verankerungsgrund 12 verankert ist.

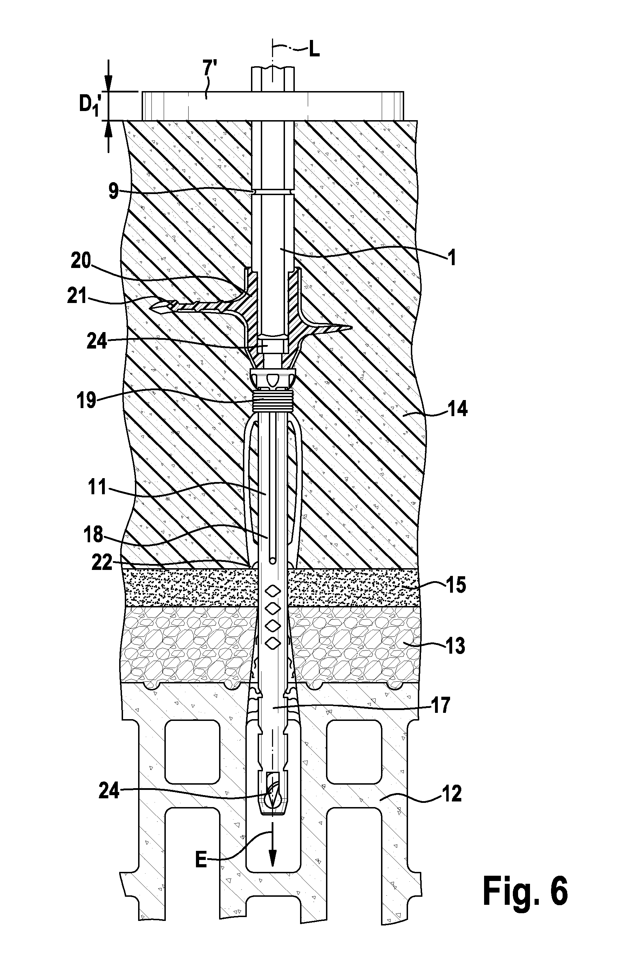

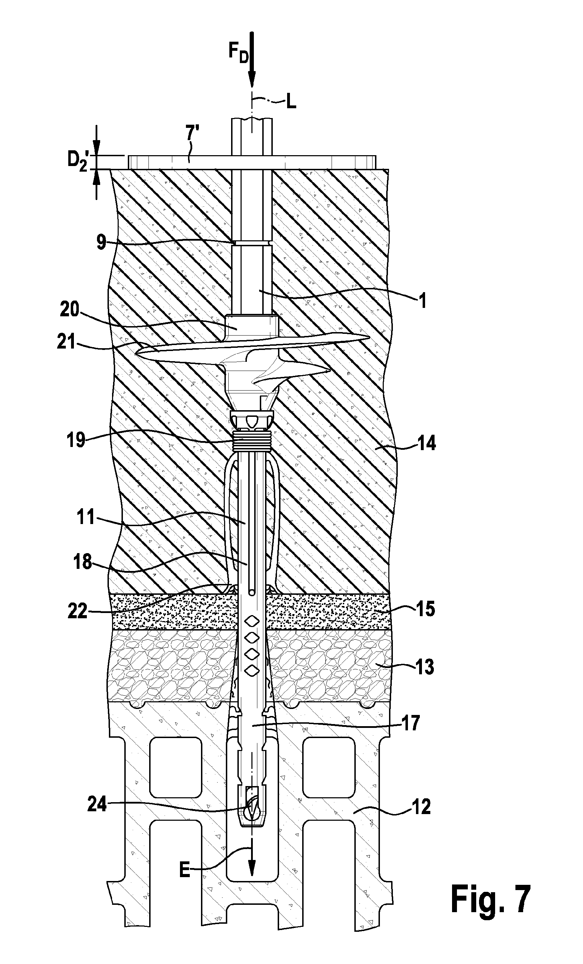

In den Figuren 6 und 7 ist eine weitere Befestigungsanordnung dargestellt, die sich nur durch die Ausbildung des Tiefenanschlags 7' des Werkzeugs 1' von der oben beschriebenen Befestigungsanordnung unterscheidet. Um Wiederholungen zu vermeiden, wird im Folgenden nur auf die Unterschiede zwischen den beiden Befestigungsanordnungen eingegangen. Der Tiefenanschlag 7' ist ebenfalls verformbar, derart, dass der Schaft 2 nach dem Anliegen des Tiefenanschlags 7' an der Dämmstoffplatte 14 unter elastischer Verformung des Tiefenanschlags 7' weiter in die Dämmstoffplatte 14 hinein bewegbar ist. Auch mit dem in den Figuren 6 und 7 dargestellten Werkzeug 1' ist es möglich zu testen, ob der Dämmstoffdübel 11 ordnungsgemäß im Verankerungsgrund 12 verankert ist. Hierzu ist der aus einem relativ weichen Kunststoff gefertigte Tiefenanschlag 7' elastisch stauchbar. Die Dicke D₁' des Tiefenanschlags 7' verringert sich, wenn der Schaft 2 des Werkzeugs 1' nach dem Anliegen des Tiefenanschlags 7' an der Dämmstoffplatte 14 aufgrund der axialen Druckkraft F_{D} weiter in die Dämmstoffplatte 14 hinein bewegt wird auf ein Maß D₂'. Bei dem in den Figuren 6 und 7 dargestellten Ausführungsbeispiel wird der Tiefenanschlag 7' um mindestens 2 mm elastisch gestaucht. Der Verwender bekommt auch in diesem Fall aufgrund der Verformung des Tiefenanschlags 7' eine direkte, optisch sichtbare Rückmeldung, dass der Dämmstoffdübel 11 nicht wie vorgesehen im Verankerungsgrund 12 verankert ist.

### Bezugszeichenliste

### Werkzeug für die Montage eines Dämmstoffdübels

- 1, 1': Werkzeug
- 2: Schaft
- 3: hinteres Ende des Schafts 2
- 4: erstes Drehmomentübertragungsmittel
- 5: vorderes Ende des Schafts 2
- 6: zweites Drehmomentübertragungsmittel
- 7, 7': Tiefenanschlag
- 8: innere Öffnung des Tiefenanschlags 7
- 9: Setztiefenmarkierung
- 10: innerer Rand
- 11: Dämmstoffdübel
- 12: Verankerungsgrund
- 13: Altputzschicht
- 14: Dämmstoffplatte
- 15: Kleberschicht
- 16: Bohrloch
- 17: Spreizabschnitt
- 18: Schaftabschnitt
- 19: Stauchzone
- 20: Halteabschnitt
- 21: Dämmstoffgewinde
- 22: Anschlagelement
- 23: Spritzhaut
- 24: Spreizelement
- 25: Aufnahme
- 26: äußerer Rand
- 27: Abplatzung
- D: Dicke des Tiefenanschlags 7
- D₁': Dicke des Tiefenanschlags 7' vor dem Stauchen
- D₂': Dicke des Tiefenanschlags 7' nach dem Stauchen
- D_{T}: Durchmesser des Tiefenanschlags 7
- D_{S}: Durchmesser des Schafts 2
- E: Einbringrichtung
- F_{D}: Druckkraft
- L: Längsachse
- U: Umfangsrichtung

## Patentansprüche

1. Werkzeug (1, 1') für die Montage eines Dämmstoffdübels (11) zur Befestigung einer Dämmstoffplatte (14) an einem Verankerungsgrund (12),
- mit einem sich in eine Längsrichtung erstreckenden Schaft (2),
- der an seinem hinteren Ende (3) ein erstes Drehmomentübertragungsmittel (4) zum Übertragen einer Drehbewegung auf das Werkzeug (1) aufweist, und
- der an seinem vorderen Ende (5) ein zweites Drehmomentübertragungsmittel (6) zum Übertragen der Drehbewegung auf den Dämmstoffdübel (11) aufweist,
- wobei am Schaft (2) zwischen den beiden Enden (3, 5) ein Tiefenanschlag (7, 7') angeordnet ist, derart, dass der Tiefenanschlag (7, 7') an der Dämmstoffplatte (14) anliegt, wenn der Dämmstoffdübel (11) in einer vorbestimmten Position in der Dämmstoffplatte (14) angeordnet ist,
**dadurch gekennzeichnet,**
**dass** der Tiefenanschlag (7, 7') verformbar ist, derart, dass der Schaft (2) nach dem Anliegen des Tiefenanschlags (7, 7') an der Dämmstoffplatte (14) unter elastischer Verformung des Tiefenanschlags (7, 7') weiter in die Dämmstoffplatte (14) hinein bewegbar ist.

2. Werkzeug nach Anspruch 1, **dadurch gekennzeichnet, dass** der Tiefenanschlag (7) biegeelastisch verformbar ist.

3. Werkzeug nach Anspruch 2, **dadurch gekennzeichnet, dass** der Tiefenanschlag (7) mit einem inneren Rand (10) am Schaft (2) anliegt und bis zu einem äußeren Rand (26) radial über den Schaft (2) übersteht und dass der Tiefenanschlag (7) derart verformbar ist, dass der äußere Rand (26) relativ zum inneren Rand (10) in Längsrichtung nach hinten verschoben wird, wenn das Werkzeug (1) nach dem Anliegen des Tiefenanschlags (7) auf der Dämmstoffplatte (14) weiter in die Dämmstoffplatte (14) hinein bewegt wird.

4. Werkzeug nach Anspruch 3, **dadurch gekennzeichnet, dass** der äußere Rand (26) um mindestens 1 mm, insbesondere um 2 mm relativ zum inneren Rand (10) in Längsrichtung bewegbar ist.

5. Werkzeug nach einem der Ansprüche 1 bis 4, **dadurch gekennzeichnet, dass** der Tiefenanschlag (7) dünnwandig ist.

6. Werkzeug nach einem der Ansprüche 1 bis 5, **dadurch gekennzeichnet, dass** der Tiefenanschlag (7') elastisch stauchbar ist, derart, dass sich die Dicke (D₁') des Tiefenanschlags verringert, wenn der Schaft (2) des Werkzeugs (1') nach dem Anliegen des Tiefenanschlags (7') an der Dämmstoffplatte (14) weiter in die Dämmstoffplatte (14) hinein bewegt wird.

7. Werkzeug nach Anspruch 6, **dadurch gekennzeichnet, dass** der Tiefenanschlag (7') um mindestens 1 mm, insbesondere um mindestens 2 mm elastisch stauchbar ist.

8. Werkzeug nach einem der Ansprüche 1 bis 7, **dadurch gekennzeichnet, dass** der Tiefenanschlag (7, 7') aus Kunststoff ist.

9. Werkzeug nach einem der Ansprüche 1 bis 8, **dadurch gekennzeichnet, dass** am Schaft (2) eine Setztiefenmarkierung (9) angeordnet ist.

10. Werkzeug nach Anspruch 9, **dadurch gekennzeichnet, dass** die Setztiefenmarkierung (9) nutartig ausgeführt ist und dass der Tiefenanschlag (7, 7') eine innere Öffnung (8) aufweist, deren Durchmesser kleiner als der Durchmesser D_{S} des Schafts (2) ist.
